# EUROPEAN PATENT APPLICATION

(11) **EP 4 794 091 A1**
(43) Date of publication of application: **19.08.2026**
(21) Application number: 23956693.8
(22) Date of filing: 25.12.2023
(51) Int. Cl.: H01M 50/30, H01M 50/15, H01M 10/0525

(54) **EXPLOSION-PROOF VALVE PATCH, COVER PLATE ASSEMBLY, BATTERY CELL, BATTERY AND ELECTRIC DEVICE**

(30) Priority: 27.10.2023 CN 202322899162 U
(71) Applicant: Contemporary Amperex Technology Co., Limited, Ningde, Fujian 352100 (CN)
(72) Inventor: HAN, Fengsheng, Ningde, Fujian 352100 (CN); HU, Hai, Ningde, Fujian 352100 (CN)
(74) Representative: Ziebig Hengelhaupt Intellectual Property Attorneys Patentanwaltskanzlei PartGmbB
(86) International application number: PCT/CN2023/141631
(87) International publication number: WO 2025/086458

(57) **Abstract**

The embodiments of the present disclosure belong to the technical field of batteries. Provided are an explosion-proof valve patch, a cover plate assembly, a battery cell, a battery and an electric device. The explosion-proof valve patch comprises a patch body; a first rubber ring arranged on a first surface of the patch body and provided with a first gap; and a second rubber ring arranged on the first surface of the patch body, located on an inner side of the first rubber ring, and provided with a second gap, the first gap and the second gap being staggered.

## Description

### CROSS-REFERENCE TO RELATED APPLICATIONS

The present disclosure is based on and claims priority to the Chinese Patent Application No. 202322899162.0, filed on October 27, 2023, which is incorporated herein by reference in its entirety.

### TECHNICAL FIELD

The present disclosure relates to the field of battery technology, and specifically, to an explosion-proof valve patch, a cover plate assembly, a battery cell, a battery, and an electric apparatus.

### BACKGROUND

Typically, an explosion-proof valve of a battery needs to be externally provided with an explosion-proof valve patch so as to provide a certain protective effect on the explosion-proof valve. The explosion-proof valve patch has an exhaust passage. After a drop test of the battery, liquid inside the cell may leak through the exhaust passage of the explosion-proof valve patch, posing a safety hazard.

### SUMMARY

The present disclosure provides an explosion-proof valve patch, a cover plate assembly, a battery cell, a battery, and an electric apparatus, to solve the technical problem that liquid inside the cell easily leaks through an exhaust passage of the explosion-proof valve patch after a drop test of the battery, thereby improving the safety performance.

According to a first aspect, an embodiment of the present disclosure provides an explosion-proof valve patch including:
a patch body;
a first rubber ring, where the first rubber ring is disposed on a first surface of the patch body, and the first rubber ring is provided with a first notch; and
a second rubber ring, where the second rubber ring is disposed on the first surface of the patch body and located on an inner side of the first rubber ring, the second rubber ring is provided with a second notch; where the first notch and the second notch are staggered.

In the above technical solution, the first rubber ring and the second rubber ring are disposed on the patch body, and the notches of the two rubber rings are staggered, so that when the patch body is mounted on a cover plate, an inner side and outer side of the patch body may be in communication with each other, ensuring balance of internal and external pressure differences, and improving the stability of the battery. In addition, during a drop test, an electrolyte is not easy to flow out from the notches, improving the safety performance.

In some embodiments, the second notch is provided at a position of the second rubber ring away from the first notch.

In the above technical solution, a communication passage between the first notch and the second notch is extended to provide a better liquid isolation effect.

In some embodiments, the patch body includes:
a main plate body, where the second rubber ring is disposed on the main plate body;
a side edge, where the side edge surrounds the main plate body and is connected to the main plate body in a bending manner; and
a flange, where the flange is connected to an end of the side edge facing away from the main plate body, and the first rubber ring is disposed on the flange.

In the above technical solution, the patch body includes the main plate body, the side edge, and the flange. The two rubber rings are respectively disposed on the main plate body and the flange, so that the two rubber rings may be respectively engaged with the cover plate and a boss, improving the liquid isolation effect.

In some embodiments, an outer edge of the second rubber ring is spaced apart from the side edge.

In the above technical solution, the outer edge of the second rubber ring is spaced apart from the side edge to improve the ventilation effect between the first rubber ring and the second rubber ring.

In some embodiments, a thickness H1 of the first rubber ring and a thickness H2 of the second rubber ring satisfy:
0.075 mm ≤ H1 ≤ 0.1 mm, and 0.075 mm ≤ H2 ≤ 0.1 mm.

In the above technical solution, the thicknesses of the first rubber ring and the second rubber ring are limited, so that the bonding strength is ensured while controlling the costs.

In some embodiments, a width of the first notch is less than a width of the second notch.

In the above technical solution, the second notch has a larger width and is configured to be aligned with a groove on the boss so as to ensure exhaust. The first notch has a smaller notch to ensure air permeability and prevent the liquid from overflowing easily.

In some embodiments, the width W1 of the first notch and the width W2 of the second notch satisfy:
0.8 mm ≤ W1 ≤ 1 mm, and 3 mm ≤ W2 ≤ 4 mm.

In the above technical solution, limiting the width ranges of the first notch and the second notch facilitates the mounting and provides better air permeability and anti-leakage effect.

In some embodiments, a radial width of the first rubber ring is less than a radial width of the second rubber ring.

In the above technical solution, the radial width of the first rubber ring is smaller, which reduces the material costs and can ensure that the first rubber ring fits a surface of the cover plate. The radial width of the second rubber ring is larger, making it easy for the second rubber ring to fully cover and fit the boss, and improving the fitting effect and facilitating the mounting.

In some embodiments, the radial width W3 of the first rubber ring and the radial width W4 of the second rubber ring satisfy:
0.5 mm ≤ W3 ≤ 1 mm, and 3 mm ≤ W4 ≤ 5 mm.

In the above technical solution, limiting the radial width ranges of the first rubber ring and the second rubber ring facilitates the mounting, reduces the materials, and provides better air permeability and anti-leakage effect.

According to a second aspect, an embodiment of the present disclosure provides a cover plate assembly including:
a cover plate, where the cover plate is provided with a mounting hole and a boss surrounding the mounting hole, and the boss is provided with an opening;
an explosion-proof valve, the explosion-proof valve being mounted in the mounting hole; and
the explosion-proof valve patch according to any one of the above embodiments, where the first rubber ring of the explosion-proof valve patch fits the cover plate and is located on an outer side of the boss, and the second rubber ring of the explosion-proof valve patch fits the boss.

In the above technical solution, the explosion-proof valve patch is provided, the first rubber ring and the second rubber ring are disposed on the patch body, and the notches of the two rubber rings are staggered, so that when the patch body is mounted on the cover plate, the inner side and outer side of the patch body may be in communication with each other, ensuring balance of internal and external pressure differences. In addition, during a drop test, the electrolyte is not easy to flow out from the notches, improving the safety performance.

In some embodiments, the radial width of the second rubber ring is not less than a width of the boss.

In the above technical solution, setting the radial width of the second rubber ring to be not less than the width of the boss helps the second rubber ring to fit and be engaged with the boss, ensuring sealing of other positions than an opening of the boss.

In some embodiments, a spacing M1 between an inner ring of the second rubber ring and an inner ring of the boss satisfies: $3 mm \leq M 1 \leq 4 mm .$

In the above technical solution, limiting the spacing between the inner ring of the second rubber ring and the inner ring of the boss ensures the sealing effect of the second rubber ring on the boss and avoids liquid leakage from other positions than the opening.

According to a third aspect, an embodiment of the present disclosure provides a battery cell including the cover plate assembly according to any one of the above embodiments.

In the above technical solution, the cover plate assembly includes the explosion-proof valve patch, the first rubber ring and the second rubber ring are disposed on the patch body, and the notches of the two rubber rings are staggered, so that when the patch body is mounted on the cover plate, the inner side and outer side of the patch body may be in communication with each other, ensuring balance of internal and external pressure differences. In addition, during a drop test, the electrolyte is not easy to flow out from the notches, improving the safety performance.

According to a fourth aspect, an embodiment of the present disclosure provides a battery including a plurality of battery cells according to the above embodiments.

In the above technical solution, the plurality of battery cells are provided, so that the capacity of the battery is improved. The explosion-proof valve patch is disposed on the battery cell, the first rubber ring and the second rubber ring are disposed on the patch body, and the notches of the two rubber rings are staggered, so that when the patch body is mounted on the cover plate, the inner side and outer side of the patch body may be in communication with each other, ensuring balance of internal and external pressure differences. In addition, during a drop test, the electrolyte is not easy to flow out from the notches, improving the safety performance.

According to a fifth aspect, an embodiment of the present disclosure provides an electric apparatus including the battery according to the above embodiment, where the battery is configured to supply electrical energy to the electric apparatus.

In the above technical solution, the explosion-proof valve patch is disposed on the battery cell of the battery, the first rubber ring and the second rubber ring are disposed on the patch body, and the notches of the two rubber rings are staggered, so that when the patch body is mounted on the cover plate, the inner side and outer side of the patch body may be in communication with each other, ensuring balance of internal and external pressure differences. In addition, during a drop test, the electrolyte is not easy to flow out from the notches, improving the safety performance.

### BRIEF DESCRIPTION OF DRAWINGS

To more clearly illustrate the technical solutions of the embodiments of the present disclosure, the drawings to be used in the embodiments will be briefly introduced below. It should be understood that the following drawings only illustrate some embodiments of the present disclosure and should not be regarded as limiting the scope. For those of ordinary skill in the art, other related drawings can be obtained based on these drawings without creative efforts.
FIG. 1 is a schematic structural diagram of a vehicle according to some embodiments of the present disclosure;
FIG. 2 is an exploded view of a structure of a battery according to some embodiments of the present disclosure;
FIG. 3 is a first schematic structural diagram of a battery cell according to some embodiments of the present disclosure;
FIG. 4 is a first schematic cross-sectional view of a battery cell according to some embodiments of the present disclosure;
FIG. 5 is an enlarged view of position A in FIG. 4;
FIG. 6 is an enlarged view of position B in FIG. 4; and
FIG. 7 is a first schematic structural diagram of an explosion-proof valve patch according to some embodiments of the present disclosure.

Reference signs in the drawings are as follows:
vehicle 1; battery 10; motor 20; controller 30;
box 11; first box body 111; second box body 112; battery cell 12; housing 121; cover plate assembly 122; cover plate 1221; boss 12211; opening 12212; pole 1222; cell 124;
explosion-proof valve patch 123; patch body 1231; main plate body 12311; side edge 12312; flange 12313; first rubber ring 1232; first notch 12321; second rubber ring 1233; and second notch 12331.

### DESCRIPTION OF EMBODIMENTS

To make the objectives, technical solutions, and advantages of the embodiments of the present disclosure clearer, the technical solutions in the embodiments of the present disclosure will be clearly and completely described below with reference to the drawings in the embodiments of the present disclosure. Apparently, the described embodiments are some embodiments of the present disclosure, but not all embodiments. Based on the embodiments in the present disclosure, all other embodiments obtained by those of ordinary skill in the art without creative efforts belong to the protection scope of the present disclosure.

Unless otherwise defined, all technical and scientific terms used in the present disclosure have the same meanings as commonly understood by those skilled in the art of the present disclosure. The terms used in the specification of the application in the present disclosure are only for the purpose of describing specific embodiments and are not intended to limit the present disclosure. The terms "include", "comprise", "have", and any variations thereof in the specification and claims of the present disclosure and the above description of the drawings are intended to cover non-exclusive inclusions. The terms "first", "second", and the like in the specification and claims of the present disclosure or the above drawings are used to distinguish different objects rather than to describe a specific order or primary-secondary relationship.

Reference to "embodiment" in the present disclosure means that specific features, structures, or characteristics described with reference to an embodiment may be included in at least one embodiment of the present disclosure. The word "embodiment" appearing in various places in this specification does not necessarily refer to the same embodiment or an independent or alternative embodiment that is exclusive of other embodiments. Those skilled in the art explicitly and implicitly understand that the embodiments described in the present disclosure can be combined with other embodiments.

In the description of the present disclosure, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Those of ordinary skill in the art can understand specific meanings of these terms in the present disclosure as suitable to specific situations.

The term "and/or" in the present disclosure is only an associative relationship for describing associated objects, indicating that three relationships may be present. For example, A and/or B may indicate three cases: presence of A; presence of both A and B; and presence of only B. In addition, the character "/" in the present disclosure generally indicates an "or" relationship between the contextually associated objects.

"A plurality of" appearing in the present disclosure refers to two or more (including two), similarly, "a plurality of groups" refers to two or more groups (including two groups), and "a plurality of pieces" refers to two or more pieces (including two pieces).

The battery cell mentioned in the embodiments of the present disclosure may include a lithium-ion secondary battery, a lithium-ion primary battery, a lithium-sulfur battery, a sodium-lithium-ion battery, a sodium-ion battery, or a magnesium-ion battery, which is not limited in the embodiments of the present disclosure. The battery cell may be in a cylindrical shape, a flat shape, a cuboid shape, or other shapes, which is not limited in the embodiments of the present disclosure either. The battery cell is generally divided into three types according to packaging methods: a cylindrical battery cell, a prismatic battery cell, and a pouch battery cell, which is not limited in the embodiments of the present disclosure either.

The battery mentioned in the embodiments of the present disclosure refers to a single physical module that includes one or more battery cells to provide higher voltage and capacity. For example, the battery mentioned in the present disclosure may include a battery module, a battery pack, or the like. A battery typically includes a box configured to encapsulate one or more battery cells or a plurality of battery modules. The box can prevent liquid or other foreign objects from affecting the charging or discharging of the battery cell.

A battery cell includes an enclosure, an electrode assembly, and an electrolyte. The enclosure is configured to accommodate the electrode assembly and the electrolyte. The electrode assembly includes a positive electrode plate, a negative electrode plate, and a separator. The battery cell mainly works by migration of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the material of the positive electrode current collector may be aluminum, and the positive electrode active material may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. The material of the negative electrode current collector may be copper, and the negative electrode active material may be carbon, silicon, or the like. To allow a large current to flow through without fusing, a plurality of positive electrode tabs are provided and stacked together, and a plurality of negative electrode tabs are provided and stacked together.

The material of the separator may be PP (polypropylene, polypropylene), PE (polyethylene, polyethylene), or the like. In addition, the electrode assembly may be a wound structure or a laminated structure, which is not limited in the embodiments of the present disclosure.

In recent years, new energy vehicles have developed rapidly. In the field of electric vehicles, traction batteries, as the power source of electric vehicles, play an irreplaceable important role. A battery includes a box and a plurality of battery cells accommodated in the box. Batteries, as core components of new energy vehicles, have high requirements on their safety and cycle life.

The inventors have found that in a typical traction battery, to avoid explosion caused by thermal runaway of the battery, an explosion-proof valve is typically disposed on the battery, and the structural strength of the explosion-proof valve is weaker than the strength of a housing of the battery. When the battery experiences thermal runaway, the explosion-proof valve is opened first to discharge gas. To avoid the explosion-proof valve from being opened due to external collision, an explosion-proof valve patch needs to be disposed outside the explosion-proof valve so as to provide a certain protective effect on the explosion-proof valve. In addition, the explosion-proof valve patch has an exhaust passage to balance the pressure inside and outside the explosion-proof valve patch under normal conditions. However, during a drop test of the battery, after the battery is impacted, the explosion-proof valve may be cracked, and liquid inside a cell may leak through the exhaust passage of the explosion-proof valve patch, causing a certain safety hazard to the battery after collision.

Based on the above considerations, to address the technical problem that liquid inside the cell easily leaks through the exhaust passage of the explosion-proof valve patch after a battery drop test, the present disclosure designs an explosion-proof valve patch including a patch body, a first rubber ring, and a second rubber ring. The first rubber ring is disposed on a first surface of the patch body, and the first rubber ring is provided with a first notch. The second rubber ring is disposed on the first surface of the patch body and located on an inner side of the first rubber ring, and the second rubber ring is provided with a second notch. The first notch and the second notch are staggered.

In the explosion-proof valve patch with this structure, the first rubber ring and the second rubber ring are disposed on the patch body, and the notches of the two rubber rings are staggered, so that when the patch body is mounted on a cover plate, an inner side and outer side of the patch body may be in communication with each other through a gap between the rubber rings and the notches, ensuring balance of internal and external pressure differences. In addition, after a drop test, since positions where the first rubber ring and the second rubber ring are located are sealed, an electrolyte cannot flow out directly. Due to the staggered arrangement of the first notch and the second notch, a narrow and long gap located between the first rubber ring and the second rubber ring is formed between the inside of the battery and the outside; and in this narrow and long gap, the resistance to the flow of the electrolyte is high, making it difficult for the electrolyte to flow out from the first notch, thereby improving the safety performance.

The battery disclosed in the embodiments of the present disclosure is applicable to, but not limited to, electric apparatuses such as vehicles, ships, or aircraft. A power supply system of the electric apparatus may include a battery thermal management system and a battery disclosed in the present disclosure, which is conducive to expanding the application range of the battery thermal management system and reducing the assembly difficulty of the battery thermal management system.

An embodiment of the present disclosure provides an electric apparatus using a battery as a power source. The electric apparatus may be but is not limited to mobile phones, tablets, notebook computers, electric toys, electric tools, electric bicycles, electric vehicles, ships, spacecraft, and the like. The electric toys may include fixed or mobile electric toys, such as game consoles, electric toy cars, electric toy ships, and electric toy aircraft. The spacecraft may include airplanes, rockets, space shuttles, spaceships, and the like.

For ease of description, an electric apparatus according to an embodiment of the present disclosure being a vehicle 1 is used as an example for description of the following embodiments.

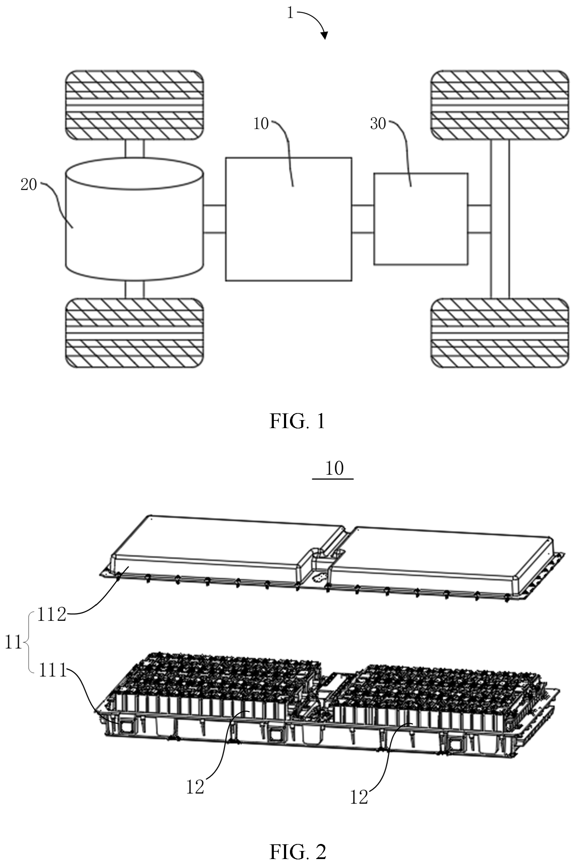

As shown in FIG. 1 which is a schematic structural diagram of a vehicle 1 according to an embodiment of the present disclosure, the vehicle 1 may be a fuel vehicle, a gas vehicle, or a new energy vehicle. The new energy vehicle may be a battery electric vehicle, a hybrid electric vehicle, an extended-range electric vehicle, or the like. A motor 20, a controller 30, and a battery 10 may be provided inside the vehicle 1. The controller 30 is configured to control the battery 10 to supply power to the motor 20. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of the present disclosure, the battery 10 can be used as not only the operational power source for the vehicle 1 but also a driving power source for the vehicle 1, replacing or partially replacing fossil fuel or natural gas to provide driving traction for the vehicle 1.

To meet different power usage needs, the battery 10 may include a plurality of battery cells 12, where the plurality of battery cells 12 may be connected in series, parallel, or series-parallel, where being connected in series-parallel means a combination of series and parallel connections.

As shown in FIG. 2 which is an exploded view of a structure of a battery 10 according to an embodiment of the present disclosure. The battery 10 includes a box 11 and a plurality of battery cells 12, and the battery cells 12 are configured to be accommodated in the box 11. The box 11 is configured to provide an assembly space for the battery cells 12. The box 11 may adopt various structures. In some embodiments, the box 11 may include a first box body 111 and a second box body 112. The first box body 111 and the second box body 112 fit each other, so that the first box body 111 and the second box body 112 together define the assembly space for accommodating the battery cells 12. The second box body 112 may be a hollow structure with an opening at one end. The first box body 111 may be a plate-like structure. The first box body 111 covers the opening side of the second box body 112, so that the first box body 111 and the second box body 112 together define the assembly space. The first box body 111 and the second box body 112 may alternatively each be a hollow structure with an opening on one side. The opening side of the first box body 111 is engaged with the opening side of the second box body 112. Certainly, the box 11 formed by the first box body 111 and the second box body 112 may be in various shapes, such as a cylinder and a cuboid.

In the battery 10, a plurality of battery cells 12 may be connected in series, parallel, or series-parallel, where being connected in series-parallel means a combination of series and parallel connections of the plurality of battery cells 12. The plurality of battery cells 12 may be directly connected in series, parallel, or series-parallel, and then an entirety formed by the plurality of battery cells 12 is accommodated in the box 11. Certainly, the battery 10 may alternatively be formed by a plurality of battery cells 12 being connected in series, parallel, or series-parallel first to form a battery module and then a plurality of battery modules being connected in series, parallel, or series-parallel to form an entirety which is accommodated in the box 11. The battery 10 may further include other structures. For example, the battery 10 may further include a busbar configured to implement electrical connection between the plurality of battery cells 12.

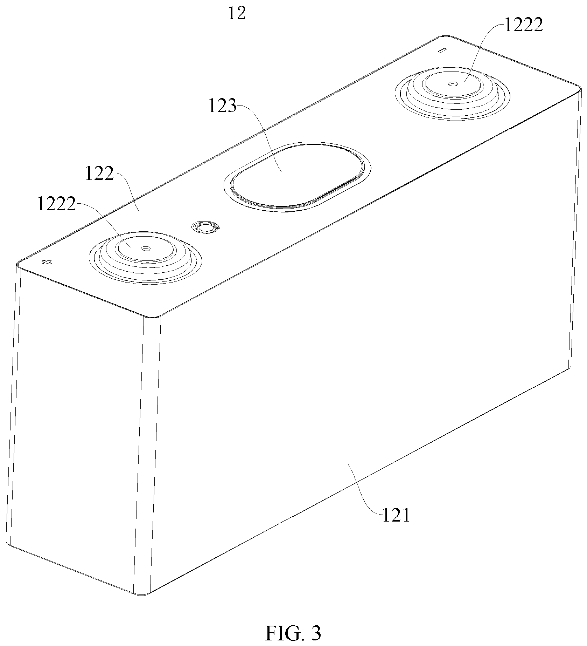

Each battery cell 12 may be a secondary battery or a primary battery, or may be a lithium-sulfur battery, a sodium-ion battery, or a magnesium-ion battery, but is not limited thereto. The battery cell 12 may be in a cylindrical shape, a flat shape, a cuboid shape, or other shapes. Exemplarily, in FIG. 3, the battery cell 12 is in a cuboid shape.

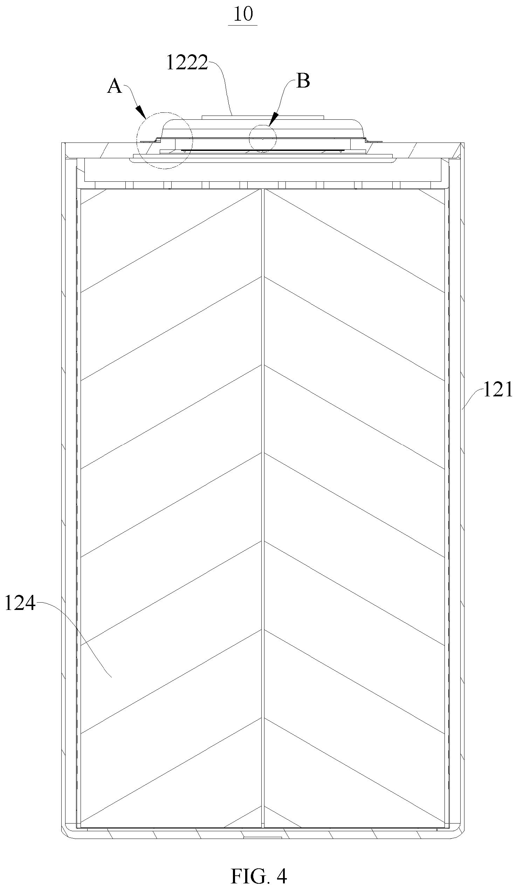

According to some embodiments of the present disclosure, as shown in FIG. 3 and FIG. 4, the present disclosure further provides a battery cell 12. The battery cell 12 may include a housing 121, a cell 124, and a cover plate assembly 122. One end of the housing 121 may be provided with an opening for mounting the cell 124. The cell 124 is provided in the housing 121, and the housing 121 provides a protective effect on the cell 124. The cover plate assembly 122 can cover the opening of the housing 121 to jointly define a sealed space with the housing 121, so that the cell 124 is isolated from the outside.

A pole 1222 may be disposed on the cover plate assembly 122, and the pole 1222 is configured to be connected to a tab of the cell 124, so that the cell 124 may be electrically connected to the outside.

According to some embodiments of the present disclosure, as shown in FIG. 4 to FIG. 7, the present disclosure further provides a cover plate assembly 122. The cover plate assembly 122 may include a cover plate 1221, an explosion-proof valve, and an explosion-proof valve patch 123.

The cover plate 1221 may be provided with a mounting hole and has a boss 12211 surrounding the mounting hole. The boss 12211 is provided with an opening 12212. The explosion-proof valve may be mounted in the mounting hole.

The mounting hole can implement communication between an inner side and outer side of the cover plate 1221. The explosion-proof valve is mounted in the mounting hole to seal the mounting hole. When the pressure inside the battery cell 12 is high, the explosion-proof valve is opened to relieve pressure, avoiding cracking and explosion of an external structure of the battery cell 12. The boss 12211 may be provided on the outer side of the cover plate 1221, that is, a side of the cover plate 1221 facing away from the cell 124. The boss 12211 can provide a certain protective effect on the explosion-proof valve and facilitate the mounting of the explosion-proof valve patch 123. The explosion-proof valve patch 123 may be mounted on the boss 12211, and the explosion-proof valve patch 123 can provide a certain protective effect on the explosion-proof valve to prevent the explosion-proof valve from being prematurely broken and opened due to an external force.

A first rubber ring 1232 of the explosion-proof valve patch 123 fits the cover plate 1221 and is located on an outer side of the boss 12211. A second rubber ring 1233 of the explosion-proof valve patch 123 fits the boss 12211. An arrangement position of the first rubber ring 1232 can achieve sealing between the explosion-proof valve patch 123 and the cover plate 1221. An arrangement position of the second rubber ring 1233 can achieve sealing between the explosion-proof valve patch 123 and the boss 12211. A top surface of the boss 12211 is provided with an opening 12212. After the explosion-proof valve patch 123 is mounted, the opening 12212 can implement communication between an inner side and outer side of the boss 12211, so that a space where the explosion-proof valve is disposed of the inner side of the boss 12211 may be in communication with the outer side of the boss 12211, allowing internal pressure and external pressure of the explosion-proof valve patch 123 to be kept balanced, thereby improving the safety performance and the stability.

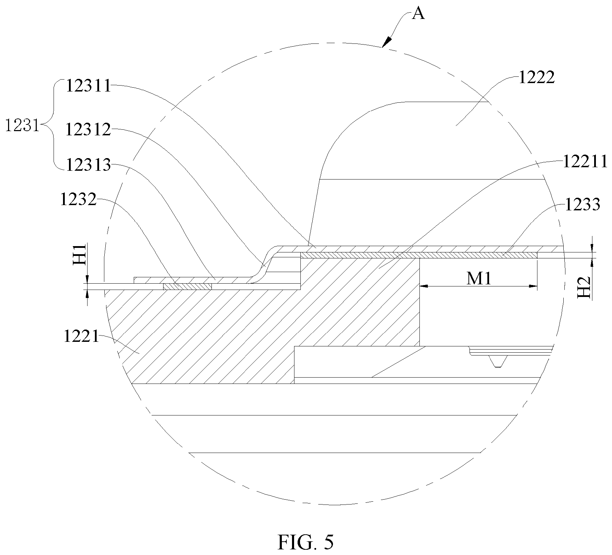

According to some embodiments of the present disclosure, as shown in FIG. 5 to FIG. 7, the present disclosure further provides an explosion-proof valve patch 123. The explosion-proof valve patch 123 may include a patch body 1231, a first rubber ring 1232, and a second rubber ring 1233.

The first rubber ring 1232 may be disposed on a first surface of the patch body 1231, and the first rubber ring 1232 may be provided with a first notch 12321.

The first surface of the patch body 1231 faces the cover plate 1221. The first rubber ring 1232 is disposed on the first surface of the patch body 1231. When the patch body 1231 is mounted on the cover plate 1221, the first rubber ring 1232 is bonded to an outer side surface of the cover plate 1221, and the first rubber ring 1232 is located on the outer side of the boss 12211, so that a position of the boss 12211 is isolated from an outer portion of the patch body 1231 through the patch body 1231 and the first rubber ring 1232, and may only be in communication with the outside through the first notch 12321 of the first rubber ring 1232.

The second rubber ring 1233 may be disposed on the first surface of the patch body 1231 and located on an inner side of the first rubber ring 1232. The second rubber ring 1233 may be provided with a second notch 12331. The first notch 12321 and the second notch 12331 are staggered.

The second rubber ring 1233 is also disposed on the first surface of the patch body 1231, and the second rubber ring 1233 may be disposed on the inner side of the first rubber ring 1232. When the explosion-proof valve patch 123 is mounted on the cover plate 1221, the second rubber ring 1233 may fit the boss 12211, so that the inner side of the boss 12211 is isolated from an outer portion of the boss 12211 through the second rubber ring 1233.

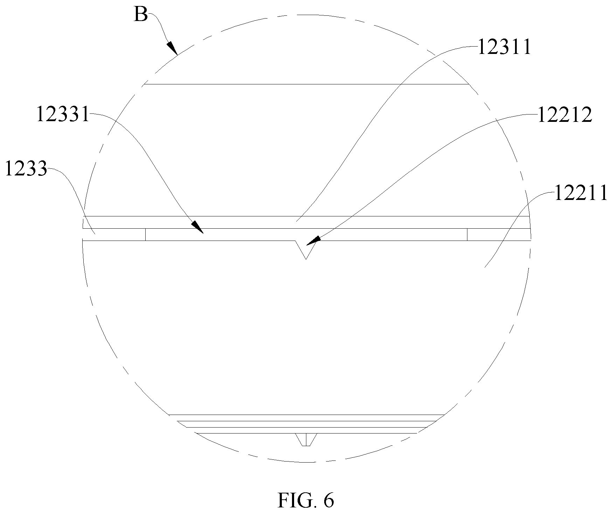

The second rubber ring 1233 may be provided with a second notch 12331, and the first notch 12321 may be staggered with the second notch 12331. When the second rubber ring 1233 is bonded to the boss 12211, as shown in FIG. 6, the second notch 12331 may face the opening 12212 on the boss 12211, so that when the patch body 1231 is pressed and mounted on the cover plate 1221, the second rubber ring 1233 cannot seal the opening 12212 of the boss 12211, ensuring that the inner side of the boss 12211 may be in communication with the outer side of the boss 12211 through the opening 12212, and an inner space of the boss 12211 needs to be in communication with an outer side of the patch body 1231 through a gap between the boss 12211 and the first rubber ring 1232.

In actual implementation, a narrow passage is formed between the first rubber ring 1232 and the second rubber ring 1233. Two ends of the narrow passage are the opening 12212 of the boss 12211 and the first notch 12321, respectively. Gas at a position of the explosion-proof valve may be in communication with an outer space of the boss 12211 through the opening 12212. A space between the outer side of the boss 12211 and the first rubber ring 1232 may be in communication with the outside of the patch body 1231 through the first notch 12321, thereby achieving the effect of balancing the internal pressure and external pressure of the explosion-proof valve patch 123. In addition, during a drop test, part of the electrolyte may flow out from the explosion-proof valve. After the electrolyte flowing out flows into the narrow passage through the opening 12212, due to a surface tension of a liquid cross-section and a pressure difference between an end of the first notch 12321 and the inner side of the boss 12211, the liquid can be blocked in the narrow passage and cannot flow out from the first notch 12321 through the narrow passage.

According to the explosion-proof valve patch 123 provided by the embodiments of the present disclosure, the first rubber ring 1232 and the second rubber ring 1233 are disposed on the patch body 1231, and the notches of the two rubber rings are staggered, so that when the patch body 1231 is mounted on the cover plate 1221, the inner side and outer side of the patch body 1231 may be in communication with each other, ensuring balance of internal and external pressure differences, and improving the stability of the battery 10. In addition, during a drop test, the electrolyte is not easy to flow out from the notches, improving the safety performance.

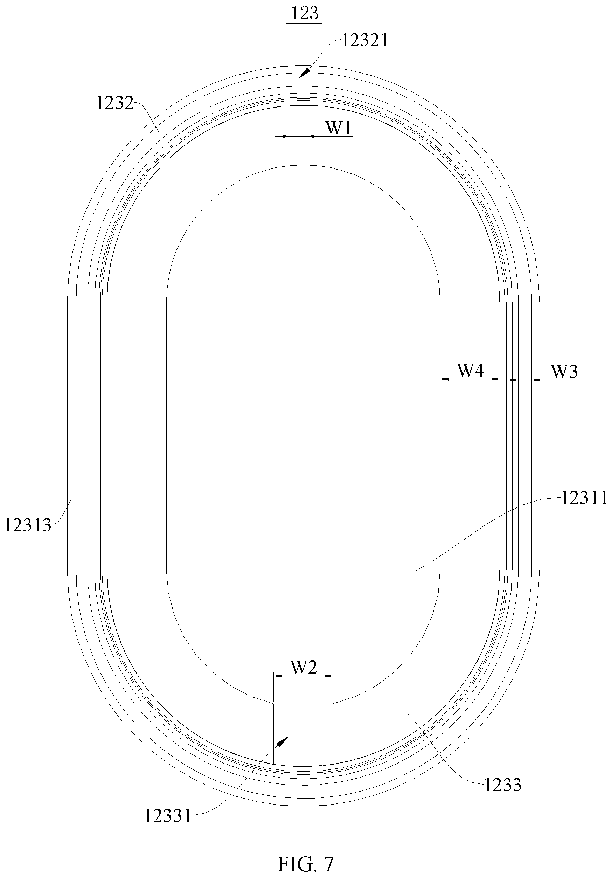

According to some embodiments of the present disclosure, as shown in FIG. 7, the second notch 12331 may be provided at a position of the second rubber ring 1233 away from the first notch 12321.

In these embodiments, the second notch 12331 is provided at the position of the second rubber ring 1233 away from the first notch 12321, so that the length of the narrow passage is extended, the resistance to the outflow of the electrolyte is higher, and the isolation effect is better.

Exemplarily, a typical explosion-proof valve may be an elongated shape, and accordingly, the boss 12211 may also be in an elongated shape. In these embodiments, a projection of the patch body 1231 in a thickness direction is also in an elongated shape, and the opening 12212 of the boss 12211 is provided at an end of the boss 12211 in a length direction. The second notch 12331 and the opening 12212 of the boss 12211 are correspondingly provided at an end of the patch body 1231 in a length direction. The first notch 12321 is provided at another end of the patch body 1231 in the length direction.

According to some embodiments of the present disclosure, as shown in FIG. 5 and FIG. 7, the patch body 1231 may include a main plate body 12311, a side edge 12312, and a flange 12313.

The second rubber ring 1233 may be disposed on the main plate body 12311. The side edge 12312 may surround the main plate body 12311 and may be connected to the main plate body 12311 in a bending manner. The flange 12313 may be connected to an end of the side edge 12312 facing away from the main plate body 12311. The first rubber ring 1232 is disposed on the flange 12313.

In these embodiments, the patch body 1231 needs to be mounted on the cover plate 1221 and the boss 12211. The main plate body 12311 of the patch body 1231 is mounted on the boss 12211. The second rubber ring 1233 may be disposed on the main plate body 12311 to bond and seal the main plate body 12311 with the boss 12211.

Since the boss 12211 protrudes from the cover plate 1221, there is a certain height difference between the main plate body 12311 and the cover plate 1221. The side edge 12312 is provided, the side edge 12312 may surround the main plate body 12311 and may be connected to the main plate body 12311 in a bending manner, and the side edge 12312 is bent toward a side of the main plate body 12311 close to the cover plate 1221. The flange 12313 may be arranged annularly. An inner ring of the flange 12313 may be connected to the end of the side edge 12312 facing away from the main plate body 12311. The main plate body 12311, the side edge 12312, and the flange 12313 are smoothly connected to form a first surface on a side of the patch body 1231 facing a bending direction of the side edge 12312. The second rubber ring 1233 is disposed on the first surface of the main plate body 12311, and the first rubber ring 1232 is disposed on a first surface of the flange 12313. The side edge 12312 is provided to reduce a spacing between the flange 12313 and the cover plate 1221. The first rubber ring 1232 is disposed on the flange 12313 to reduce the thickness of the first rubber ring 1232 and reduce the materials used.

According to some embodiments of the present disclosure, as shown in FIG. 5 and FIG. 7, an outer edge of the second rubber ring 1233 may be spaced apart from the side edge 12312.

The outer edge of the second rubber ring 1233 is spaced apart from the side edge 12312. This facilitates the mounting of the explosion-proof valve patch 123 on the cover plate 1221, prevents the side edge 12312 from being bonded to the side edge 12312 of the boss 12211 through the second rubber ring 1233, and prevents a coverage range of the second rubber ring 1233 from being too large and affecting the smoothness of the narrow passage between the boss 12211 and the side edge 12312.

According to some embodiments of the present disclosure, as shown in FIG. 5, a thickness H1 of the first rubber ring 1232 and a thickness H2 of the second rubber ring 1233 may satisfy: 0.075 mm ≤ H1 ≤ 0.1 mm, and 0.075 mm ≤ H2 ≤ 0.1 mm.

In these embodiments, the first rubber ring 1232 and the second rubber ring 1233 not only play a role in sealing the patch body 1231 with the cover plate 1221 and the boss 12211, but also play a role in bonding and fixing. Therefore, it is necessary to ensure that the thicknesses of the first rubber ring 1232 and the second rubber ring 1233 are not too small, so that the bonding strength requirements are met; in addition, excessive thickness may cause material waste.

Therefore, the thickness H1 of the first rubber ring 1232 may satisfy: 0.075 mm ≤ H1 ≤ 0.1 mm. The thickness H2 of the second rubber ring 1233 may satisfy: 0.075 mm ≤ H2 ≤ 0.1 mm.

Exemplarily, the thickness H1 of the first rubber ring 1232 may be as follows: H1 = 0.075 mm; H1 = 0.08 mm; H1 = 0.09 mm; or H1 = 0.1 mm. Exemplarily, the thickness H2 of the second rubber ring 1233 may be as follows: H2 = 0.075 mm; H2 = 0.08 mm; H2 = 0.09 mm; or H2 = 0.1 mm. It can be understood that H1 and H2 may be equal or unequal, which is determined depending on actual conditions.

According to some embodiments of the present disclosure, as shown in FIG. 7, a width of the first notch 12321 may be less than a width of the second notch 12331.

In these embodiments, the width dimension of the first notch 12321 is smaller to reduce the size of an external outlet of the narrow passage, making it difficult for the electrolyte to flow out. The width dimension of the second notch 12331 is larger, so that when the explosion-proof valve patch 123 is mounted on the cover plate 1221, the second notch 12331 needs to face the opening 12212 of the boss 12211 so as to prevent the opening 12212 from being blocked and causing ventilation failure. The width dimension of the second notch 12331 is set to be larger, making matching easier during mounting, and improving the assembly efficiency and assembly quality.

According to some embodiments of the present disclosure, as shown in FIG. 7, the width W1 of the first notch 12321 and the width W2 of the second notch 12331 may satisfy: 0.8 mm ≤ W1 ≤ 1 mm, and 3 mm ≤ W2 ≤ 4 mm.

In these embodiments, limiting the width W1 of the first notch 12321 and the width W2 of the second notch 12331 facilitates the mounting and ensures better air permeability and anti-leakage effect.

Exemplarily, the width W1 of the first notch 12321 may be as follows: W1 = 0.8 mm; W1 = 0.9 mm; or W1 = 1 mm. Exemplarily, the width W2 of the second notch 12331 may be as follows: W2 = 0.8 mm; W2 = 0.9 mm; or W2 = 1 mm.

According to some embodiments of the present disclosure, as shown in FIG. 7, a radial width of the first rubber ring 1232 may be less than a radial width of the second rubber ring 1233.

In these embodiments, the first rubber ring 1232 is configured to be bonded to a surface of the cover plate 1221. Since an area of the cover plate 1221 is large, under the condition that the bonding strength is ensured, a smaller width of the first rubber ring 1232 leads to a better effect, so that the materials used are reduced. The second rubber ring 1233 needs to be bonded and sealed with the boss 12211. To enable the patch body 1231 to effectively protect the explosion-proof valve, the size of the main plate body 12311 is slightly larger than that of the boss 12211. To reduce the impact of assembly errors on the sealing effect, a larger size of the second rubber ring 1233 leads to a better effect, ensuring that the second rubber ring 1233 is bonded and sealed with the boss 12211 in its circumferential direction.

According to some embodiments of the present disclosure, as shown in FIG. 7, the radial width W3 of the first rubber ring 1232 and the radial width W4 of the second rubber ring 1233 may satisfy: 0.5 mm ≤ W3 ≤ 1 mm, and 3 mm ≤ W4 ≤ 5 mm.

In these embodiments, the radial width of the first rubber ring 1232 should not be excessively large while satisfying the mounting strength, so as to reduce the material costs. The radial width of the second rubber ring 1233 should not be excessively small, so as to reduce the probability of gaps between the boss 12211 and the second rubber ring 1233 at positions other than the second notch 12331 during mounting. In addition, it is necessary to prevent the radial width of the second rubber ring 1233 from being excessively large, as this would also increase the production costs.

Exemplarily, the radial width W3 of the first rubber ring 1232 may be as follows: W3 = 0.5 mm; W3 = 0.75 mm; or W3 = 1 mm. Exemplarily, the radial width W4 of the second rubber ring 1233 may be as follows: W4 = 0.5 mm; W4 = 0.75 mm; or W4 = 1 mm.

According to some embodiments of the present disclosure, as shown in FIG. 5, the radial width of the second rubber ring 1233 may be not less than a width of the boss 12211.

In these embodiments, the radial width of the second rubber ring 1233 is not less than the width of the boss 12211, so that the second rubber ring 1233 can better fit the boss 12211 during mounting, improving the sealing effect and the mounting efficiency.

According to some embodiments of the present disclosure, as shown in FIG. 5, a spacing M1 between an inner ring of the second rubber ring 1233 and an inner ring of the boss 12211 may satisfy: 3 mm ≤ M1 ≤ 4 mm.

In these embodiments, to ensure the sealing effect between the second rubber ring 1233 and the boss 12211, the second rubber ring 1233 is at least partially engaged with the inner ring of the boss 12211. Limiting the spacing M1 between the inner ring of the second rubber ring 1233 and the inner ring of the boss 12211 further limits the radial width of the second rubber ring 1233 and avoids the material waste of the second rubber ring 1233.

Exemplarily, the spacing M1 between the inner ring of the second rubber ring 1233 and the inner ring of the boss 12211 may be as follows: M1 = 3 mm; M1 = 3.5 mm; or M1 = 4 mm.

It can be understood that in some embodiments, the radial width W4 of the second rubber ring 1233 may be equal to M1. In this case, an outer ring of the second rubber ring 1233 is engaged and sealed with the inner ring of the boss 12211, which can also achieve the sealing effect and can reduce the assembly height after the patch is assembled.

According to some embodiments of the present disclosure, the present disclosure further provides a battery 10. The battery 10 may include a plurality of battery cells 12 according to any of the above solutions.

According to some embodiments of the present disclosure, the present disclosure further provides an electric apparatus. The electric apparatus may include the battery 10 according to any of the above solutions, and the battery 10 is configured to supply electrical energy to the electric apparatus.

The electric apparatus may be any device or system that uses the battery 10 as described above.

According to some embodiments of the present disclosure, as shown in FIG. 5 to FIG. 7, the present disclosure provides an explosion-proof valve patch 123. The explosion-proof valve patch 123 includes a patch body 1231, a first rubber ring 1232, and a second rubber ring 1233.

The patch body 1231 includes a main plate body 12311, a side edge 12312, and a flange 12313. The side edge 12312 surrounds the main plate body 12311 and is connected to a periphery of the main plate body 12311 in a bending manner. The flange 12313 is arranged annularly. An inner ring of the flange 12313 is connected to an end of the side edge 12312 facing away from the main plate body 12311. The main plate body 12311, the side edge 12312, and the flange 12313 are smoothly connected to form a first surface on a side of the patch body 1231 facing a bending direction of the side edge 12312.

The first rubber ring 1232 is disposed on a first surface of the flange 12313, and the first rubber ring 1232 is provided with a first notch 12321. The second rubber ring 1233 is disposed on a first surface of the main plate body 12311, and the second rubber ring 1233 is provided with a second notch 12331. The second notch 12331 is provided on a side of the second rubber ring 1233 away from the first notch 12321.

A thickness H1 of the first rubber ring 1232 and a thickness H2 of the second rubber ring 1233 satisfy: 0.075 mm ≤ H1 ≤ 0.1 mm, and 0.075 mm ≤ H2 ≤ 0.1 mm. A width W1 of the first notch 12321 and a width W2 of the second notch 12331 satisfy: 0.8 mm ≤ W1 ≤ 1 mm, and 3 mm ≤ W2 ≤ 4 mm. A radial width W3 of the first rubber ring 1232 and a radial width W4 of the second rubber ring 1233 satisfy: 0.5 mm ≤ W3 ≤ 1 mm, and 3 mm ≤ W4 ≤ 5 mm.

It should be noted that without conflict, the embodiments in the present disclosure and the features in the embodiments can be combined with each other.

The above are only preferred embodiments of the present disclosure and are not used to limit the present disclosure. For those skilled in the art, the present disclosure can have various changes and modifications. Any modification, equivalent replacement, improvement or the like made within the spirit and principle of the present disclosure shall fall within the protection scope of the present disclosure.

## Claims

1. An explosion-proof valve patch, comprising:
a patch body;
a first rubber ring, wherein the first rubber ring is disposed on a first surface of the patch body, and the first rubber ring is provided with a first notch; and
a second rubber ring, wherein the second rubber ring is disposed on the first surface of the patch body and located on an inner side of the first rubber ring, and the second rubber ring is provided with a second notch; wherein the first notch and the second notch are staggered.

2. The explosion-proof valve patch according to claim 1, wherein the second notch is provided at a position of the second rubber ring away from the first notch.

3. The explosion-proof valve patch according to claim 1 or 2, wherein the patch body comprises:
a main plate body, wherein the second rubber ring is disposed on the main plate body;
a side edge, wherein the side edge surrounds the main plate body and is connected to the main plate body in a bending manner; and
a flange, wherein the flange is connected to an end of the side edge facing away from the main plate body, and the first rubber ring is disposed on the flange.

4. The explosion-proof valve patch according to claim 3, wherein an outer edge of the second rubber ring is spaced apart from the side edge.

5. The explosion-proof valve patch according to any one of claims 1 to 4, wherein a thickness H1 of the first rubber ring and a thickness H2 of the second rubber ring satisfy:
0.075 mm ≤ H1 ≤ 0.1 mm, and 0.075 mm ≤ H2 ≤ 0.1 mm.

6. The explosion-proof valve patch according to any one of claims 1 to 5, wherein a width of the first notch is less than a width of the second notch.

7. The explosion-proof valve patch according to claim 6, wherein the width W1 of the first notch and the width W2 of the second notch satisfy:
0.8 mm ≤ W1 ≤ 1 mm, and 3 mm ≤ W2 ≤ 4 mm.

8. The explosion-proof valve patch according to any one of claims 1 to 7, wherein a radial width of the first rubber ring is less than a radial width of the second rubber ring.

9. The explosion-proof valve patch according to claim 8, wherein the radial width W3 of the first rubber ring and the radial width W4 of the second rubber ring satisfy:
0.5 mm ≤ W3 ≤ 1 mm, and 3 mm ≤ W4 ≤ 5 mm.

10. A cover plate assembly, comprising:
a cover plate, wherein the cover plate is provided with a mounting hole and a boss surrounding the mounting hole, and the boss is provided with an opening;
an explosion-proof valve, the explosion-proof valve being mounted in the mounting hole; and
the explosion-proof valve patch according to any one of claims 1 to 9, wherein the first rubber ring of the explosion-proof valve patch fits the cover plate and is located on an outer side of the boss, and the second rubber ring of the explosion-proof valve patch fits the boss.

11. The cover plate assembly according to claim 10, wherein the radial width of the second rubber ring is not less than a width of the boss.

12. The cover plate assembly according to claim 11, wherein a spacing M1 between an inner ring of the second rubber ring and an inner ring of the boss satisfies: $3 mm \leq M 1 \leq 4 mm .$

13. A battery cell, comprising the cover plate assembly according to any one of claims 10 to 12.

14. A battery, comprising a plurality of battery cells according to claim 13.

15. An electric apparatus, comprising the battery according to claim 14, wherein the battery is configured to supply electrical energy to the electric apparatus.
